# EUROPEAN PATENT APPLICATION

(11) **EP 1 908 738 A1**
(43) Date of publication of application: **09.04.2008**
(21) Application number: 06766595.0
(22) Date of filing: 12.06.2006
(51) Int. Cl.: C03C 27/12, B60J 1/00

(54) **LAMINATED GLASS**

(30) Priority: 13.06.2005 JP 2005172818
(71) Applicant: Sekisui Chemical Co., Ltd., Osaka 530-8565 (JP)
(72) Inventor: MARUMOTO, Tadashi c/o Sekisui Chemical Co., Ltd., Shiga 5288585 (JP); MITOMA, Kunio c/o Sekisui Chemical Co., Ltd., Shiga 5288585 (JP)
(74) Representative: Weller, Wolfgang
(86) International application number: PCT/JP2006/311733
(87) International publication number: WO 2006/134860

(57) **Abstract**

The object of the present invention is to provide a laminated glass which has fundamental characteristics required of laminated glass, and which shows a bright color when viewed from the exterior but shows substantially the same color as the color of an interior glass sheet itself when viewed from the interior. The laminated glass comprises a laminate of two glass sheets and an interlayer interposed between the glass sheets. One of the glass sheets arranged on the exterior side in use is a tinted transparent glass sheet and the other glass sheet arranged on the interior side in use is a visible light reflective glass sheet. The interlayer comprises fine particles of tin-doped indium oxide (ITO).

## Description

### TECHNICAL FIELD

The present invention relates to a laminated glass. More particularly, the present invention relates to a laminated glass which has fundamental characteristics required of laminated glass, and the color of which can be easily controlled so that when the laminated glass is used for, for example, windows for separating the interior from the exterior, it can show a bright color when viewed from the exterior but can show substantially the same color as the color of an interior glass sheet itself with little influence of an interlayer and an exterior glass sheet when viewed from the interior.

### BACKGROUND ART

Laminated glass has fundamental characteristics excellent in transparency, weatherability, adhesion between laminated layers, resistance to penetration, and resistance to shattering, and is therefore widely used in, for example, vehicles such as automobiles and architectures for windows. An example of such laminated glass includes one obtainable by interposing an interlayer for laminated glass composed of a polyvinyl acetal resin (e.g., a polyvinyl butyral resin plasticized with a plasticizer) between at least one pair of glass sheets and integrating them into one unit. In recent years, heat insulating laminated glass is preferably used to improve heat insulation. As such heat insulating laminated glass, there is conventionally used a laminated glass having an interlayer containing tin-doped indium oxide (ITO) fine particles as heat insulating fine particles. However, in such a case where ITO fine particles are used to impart heat insulating ability to an interlayer, if the amount of the ITO fine particles is too much, there is a problem that the haze value of the interlayer is increased.

Further, in a case where ITO fine particles are added to an interlayer, the resultant heat insulating laminated glass shows a bluish color different from the color of an interior glass sheet itself under the influence of the ITO fine particles contained in the interlayer when viewed from the interior. Therefore, it is necessary to separately control the color of the interior glass sheet. Such control of the color of the interior glass sheet involves a lot of effort because the influence of the ITO fine particles contained in the interlayer and the color glass used as an exterior glass sheet should be taken into consideration. It can be considered that an effort to control the color of the interior glass sheet can be saved by, for example, reducing the ITO fine particle content of the interlayer. However, in this case, there is a fear that fundamental characteristics, such as heat insulation, required of heat insulating laminated glass are impaired. In addition, there is also a fear that the resultant laminated glass with a reduced ITO fine particle content transmits visible light and therefore shows a faint color when viewed from the exterior (i.e., it is hard for the laminated glass to show a bright color), thereby deteriorating external appearance.

For these reasons described above, there is strong demand for laminated glass which has fundamental characteristics required of laminated glass, and which shows a bright color when viewed from the exterior and shows a color with little influence of an interlayer and an exterior glass sheet when viewed from the interior.

An example of heat insulating laminated glass (especially, laminated glass having a structure of color glass/interlayer containing ITO fine particles/color glass) is disclosed in Patent Literature No 1: Japanese Patent Laid-open No. 2002-326847.

### DISCLOSURE OF THE INVENTION

### PROBLEMS TO BE SOLVED BY THE INVENTION

It is an object of the present invention to provide a laminated glass which has fundamental characteristics required of laminated glass, and which shows a bright color when viewed from the exterior but shows substantially the same color as the color of an interior glass sheet itself when viewed from the interior.

### MEANS FOR SOLVING THE PROBLEM

In order to achieve the above object, the present inventors have conducted extensive investigation, and as a result found that arrangement of a so-called color glass sheet that is tinted and transparent as an interior glass sheet, a so-called mirror glass that reflects visible light as an exterior glass sheet and an interlayer containing tin-doped indium oxide (ITO) fine particles, makes it possible to produce a laminated glass which has fundamental characteristics, such as heat insulation, required of laminated glass, and which shows a bright color derived from the color glass when viewed from the exterior, but shows substantially the same color as the original color of the interior glass sheet with little influence of the colors of the interlayer and the exterior glass sheet when viewed from the interior. The present inventors have conducted more extensive studies to complete the present invention.

Namely, the present invention relates to the following:
(1) A laminated glass comprising a laminate of two glass sheets and an interlayer interposed between the glass sheets, wherein one of the glass sheets is a tinted transparent glass sheet and the other is a visible light reflective glass sheet, and wherein the interlayer contains tin-doped indium oxide (ITO) fine particles;
(2) The laminated glass according to (1) above, wherein the tinted transparent glass sheet is arranged on the exterior side and the visible light reflective glass sheet is arranged on the interior side of a room in use;
(3) The laminated glass according to (1) or (2) above, wherein the visible light reflective glass sheet is one obtainable by coating one or both surfaces of a glass sheet with a metal film;
(4) The laminated glass according to (3) above, wherein the metal film is a silver film;
(5) The laminated glass according to any one of (1) to (4) above, wherein the interlayer is composed of a polyvinyl acetal resin;
(6) The laminated glass according to (5), wherein the polyvinyl acetal resin is a polyvinyl butyral resin plasticized with a plasticizer;
(7) The laminated glass according to any one of (1) to (6) above, wherein the amount of the tin-doped indium oxide (ITO) fine particles contained in the interlayer is 0.1 to 1.0% by mass of the interlayer; and
(8) The laminated glass according to any one of (1) to (7) above, which is used in vehicles as side glass, rear glass, or roof glass.

### EFFECTS OF THE INVENTION

When a laminated glass of the present invention is used in, for example, vehicles or buildings for windows, it shows a bright color derived from the tinted transparent glass sheet arranged on the exterior side when viewed from the exterior but shows substantially the same color as the original color of the interior glass sheet with little influence of the colors of the interlayer and the exterior glass sheet when viewed from the interior, while maintaining fundamental characteristics required of laminated glass. Therefore, unlike conventional laminated glass, there is no necessity to spend a lot of effort to control the color of the interior glass sheet.

### BEST MODE FOR CARRYING OUT THE INVENTION

The laminated glass of the present invention comprises two glass sheets and an interlayer interposed between the glass sheets being laminated together. One of the glass sheets is a tinted transparent glass sheet and the other is a visible light reflective glass sheet. The interlayer contains fine particles of tin-doped indium oxide (ITO). In a case where the laminated glass of the present invention having such structure as described above is used in, for example, vehicles or buildings for windows, the tinted transparent glass sheet and the visible light reflective glass sheet are usually arranged on the exterior side and the interior side, respectively. Hereinbelow, structural components of the laminated glass of the present invention and a method for producing the laminated glass of the present invention will be described.

### (Tinted Transparent Glass Sheet)

The tinted transparent glass sheet is a glass sheet made of tinted transparent glass, and is not particularly limited as long as it does not interfere with the achievement of the object of the present invention and the known tinted transparent glass may be used. Examples of such tinted transparent glass include green soda-lime-silica glass, blond soda-lime-silica glass, gray soda-lime-silica glass, and blue soda-lime-silica glass. In a case where green soda-lime-silica glass is used as the tinted transparent glass, soda-lime-silica glass with a total iron content of 0.3 to 1% by mass in terms of Fe₂O₃ is used, and preferably, soda-lime-silica glass whose mass of FeO in terms of Fe₂O₃ is in the range of 20 to 40% of the mass of total iron in terms of Fe₂O₃ is used. Further, the sum of the total iron contents in terms of Fe₂O₃ of the individual glass sheets in a 1 cm² piece of the laminated glass is preferably in the range of 2 to 7 mg.

### (Visible Light Reflective Glass Sheet)

The visible light reflective glass sheet is not particularly limited as long as it does not interfere with the achievement of the object of the present invention, and such visible light reflective glass sheet can be obtained according to a conventional method, by coating one or both surfaces of a glass sheet with a metal film. More specifically, the visible light reflective glass sheet can be obtained by, for example, coating at least one glass surface of a glass sheet with a metal film by sputtering, vacuum evaporation, ion plating, or the like. Examples of the metal materials for forming such metal film include metals having an ability to reflect rays of light, such as Ag (silver), Au (gold), Cu (copper), Pd (palladium) and Rh (rhodium). As the metal film, a silver film is preferably used. In a case where only one surface of a glass sheet is coated with a metal film, the metal film is preferably provided on the surface located on the interlayer side, that is, on the surface closer to the exterior in normal use. The thickness of the metal film is preferably in the range of about 2 to 200 nm.

### (Interlayer)

The interlayer is not particularly limited as long as it contains tin-doped indium oxide (ITO) fine particles. The amount of the tin-doped indium oxide (ITO) fine particles contained in the interlayer is not particularly limited only if the object of the present invention can be achieved, but is preferably in the range of 0.1 to 1.0% by mass. The particle diameters of the ITO fine particles are not particularly limited, but are preferably in the range of 10 to 80 nm.

With respect to the resin to be mainly used for forming the interlayer (hereinafter, also referred to as a "constituent resin"), there is no particular limitation as long as the object of the present invention can be achieved, and known resins can be appropriately used. Among them, a polyvinyl acetal resin is preferred, a polyvinyl acetal resin plasticized with a plasticizer is more preferred, and a plasticized polyvinyl butyral resin is most preferred.

Examples of the plasticizer include known plasticizers conventionally used for forming interlayers for laminated glass, such as organic ester-based plasticizers (e.g., monobasic acid esters, polybasic acid esters). Typical examples of such plasticizers include: (i) glycol-based esters obtained by reaction between triethylene glycol and organic acid; (ii) esters of organic acid with linear or branched alcohol having 4 to 8 carbon atoms; and (iii) triethylene glycol di-2-ethylbutyrate, triethylene glycol di-2-ethylhexoate, triethylene glycol dicaprylate, and triethylene glycol di-ethylhexanoate (3GO). The amount of the plasticizer to be used is not particularly limited as long as the object of the present invention can be achieved, but is preferably in the range of 30 to 70 parts by mass, particularly preferably in the range of 35 to 45 parts by mass, relative to 100 parts by mass of the constituent resin.

In addition to the constituent resin and the plasticizer, the interlayer may further contain the known various additives such as UV absorbers, antioxidants, light stabilizers, and surfactants.

The interlayer can be obtained by using the various materials mentioned above according to a conventional film forming method. For example, the interlayer can be obtained by forming a mixture of the materials into a sheet of film according to a conventional film forming method such as extrusion, calendering, or pressing. These film forming methods are based on well-established techniques, and therefore can be appropriately used in the present invention.

### (Production Method)

The laminated glass of the present invention can be produced according to a conventional method by laminating the tinted transparent glass sheet and the visible light reflective glass sheet through the interlayer, and integrating them into one unit. For example, the laminated glass of the present invention can be produced by interposing the interlayer between the exterior glass sheet and the interior glass sheet, placing them in a rubber bag to carry out preliminary bonding of the interlayer with the glass sheets at about 70 to 110°C by vacuum suction to obtain a laminate, and carrying out final bonding of the laminate at about 120 to 150°C under a pressure of about 1 to 1. 5 MPa in an autoclave or a pressing machine having the function of heating.

As in the case of conventional laminated glass, the laminated glass of the present invention can be used for various purposes such as windows in vehicles (e.g., automobiles) and architectures. Particularly, the laminated glass of the present invention is suitable for use in vehicles as side glass, rear glass, or roof glass.

When the laminated glass of the present invention is used in vehicles as side glass, rear glass, or roof glass, and the laminated glass is reduced in its thickness for weight reduction, there is a fear that sound-insulating performance is impaired, resulting in affecting comfort of passengers in vehicles Therefore, in this case, it is preferred that a sound-insulating film is bonded to the laminated glass.

The sound-insulating film may be interposed between the interlayer and any one of the glass sheets in the course of production of the laminated glass of the present invention, or may be bonded to the interlayer in advance before production of the laminated glass.

The thicknesses of the individual glass sheets and the interlayer constituting the laminated glass of the present invention are not particularly limited, and can be appropriately set to the extent known or feasible according to the intended use of the laminated glass.

### EXAMPLE

### (Examples 1 and 2 and Comparative Examples 1 and 2)

### (1) Preparation of Interlayer

Trioctyl phosphate was dispersed in triethylene glycol di-ethylhexanoate (3GO) to obtain a mixture, and then ITO fine particles (average particle diameter: 35 nm) were dispersed in the mixture to obtain an ITO fine particle dispersion. The ITO fine particle dispersion was added to a polyvinyl butyral resin, and the resulting mixture was sufficiently melt-kneaded using a mixing roll, and was then press-molded using a press-molding machine at 150°C for 30 minutes to obtain an interlayer (SCF) having a thickness of 0.8 mm. When the ITO fine particle dispersion was prepared, the amount of the ITO fine particles was controlled so that the ITO fine particle content of a finally obtained interlayer was 0.2% by mass. Further, when the ITO fine particle dispersion was added to a polyvinyl butvral resin the amount of the polyvinyl butyral resin was controlled so that the amount of each of trioctyl phosphate and 3GO were 0.08 part by mass and 40 parts by mass, respectively, relative to 100 parts by mass of the polyvinyl butyral resin.

### (2) Production of Laminated Glass

The interlayer (SCF) obtained in (1) above was interposed between a tinted transparent glass sheet as exterior glass and a visible light reflective glass sheet or a tinted transparent glass sheet as interior glass, as shown in Table 1, and then they were placed in a rubber bag, which was then deaerated under a vacuum of 2.6 kPa for 20 minutes and transferred into an oven, while keeping it deaerated, followed by vacuum-pressing at 90°C for 30 minutes to carry out the preliminarily bonding of the laminated body. The preliminary bonded laminated body was subjected to pressure bonding (finally bonded) at 135°C for 20 minutes under a pressure of 1.2 MPa in an autoclave to produce a laminated glass having a structure shown in Table 1.

**Table 1**

| | Laminated Glass | | |
|---|---|---|---|
| | Exterior Glass | Interlayer | Interior Glass |
| Example 1 | normal green thickness: 3 mm | SCF | reflective clear* thickness: 4 mm (visible light reflective glass sheet) |
| Example 2 | normal bronze thickness: 3 mm | SCF | reflective clear* thickness: 4 mm (visible light reflective glass sheet) |
| Comparative Example 1 | normal green thickness: 3 mm | SCF | normal green thickness: 3 mm |
| Comparative Example 2 | normal bronze thickness: 3 mm | SCF | normal bronze thickness: 3 mm |

| | | | |
|---|---|---|---|
| * glass having Ag film coated on its surface located on the exterior side (that is, on the interlayer side) | | | |

### (Evaluation)

The laminated glasses produced in the Examples 1 and 2 and the Comparative Examples 1 and 2 were evaluated using the following methods. The evaluation results are shown in Table 2.

### Measurement of Visible Light Transmittance (Tv), Solar Transmittance (Te), and Solar Reflectance (Re)

The visible light transmittance (Tv) at the wavelength of 380 to 780 nm, solar transmittance (Te) at the wavelength of 300 to 2100 nm, and solar reflectance (Re) at the wavelength of 300 to 2100 nm of the laminated glass were measured using a direct-recording spectrophotometer (manufactured by Shimadzu Corporation under the trade name of "UV3100") according to JIS Z 8722 and JIS R 3106.

**Table 2**

| | Tv | Te | Re |
|---|---|---|---|
| Example 1 | 32.0 | 24.9 | 18.5 |
| Example 2 | 26.4 | 28.1 | 17.2 |
| Comparative Example 1 | 73.9 | 38.1 | 5.8 |
| Comparative Example 2 | 50.2 | 39.5 | 5.2 |

| | | | |
|---|---|---|---|
| (Unit: %) | | | |

Further, each of the laminated glasses of the Examples and the Comparative Examples was used as a windowpane to observe its color during the daytime in fine weather. As a result, the laminated glass of the Example 1 or 2 showed a bright color derived from the tinted transparent glass sheet arranged on the exterior side when viewed from the exterior by the naked eye, and showed substantially the same color as the original color of the interior glass sheet when viewed from the interior by the naked eye.

On the other hand, the laminated glass of Comparative Example 1 or 2 showed a color less bright than that of Example 1 or 2 when viewed from the exterior by the naked eye, and showed a mixed color of the color produced through overlapping of the interior glass sheet and the exterior glass sheet and the color (blue) derived from the ITO fine particles contained in the interlayer when viewed from the interior by the naked eye.

As can be seen from Table 2, the visible light transmittance (Tv) and solar transmittance (Te) of the laminated glass of Example 1 or 2 are lower than those of Comparative Example 1 or 2, and the solar reflectance (Re) of the laminated glass of Example 1 or 2 is higher than that of Comparative Example 1 or 2. It can be said that the results shown in Table 2 support the observations described above.

### INDUSTRIAL APPLICABILITY

The laminated glass of the present invention can be used for various purposes as in the case of conventional laminated glass, but is particularly suitable for use in vehicles as side glass, rear glass, or roof glass.

## Claims

1. A laminated glass comprising a laminate of two glass sheets and an interlayer interposed between the glass sheets, wherein one of the glass sheets is a tinted transparent glass sheet and the other is a visible light reflective glass sheet, and wherein the interlayer contains tin-doped indium oxide (ITO) fine particles.

2. The laminated glass according to claim 1, wherein the tinted transparent glass sheet is arranged on the exterior side and the visible light reflective glass sheet is arranged on the interior side of a room in use.

3. The laminated glass according to claim 1 or 2, wherein the visible light reflective glass sheet is one obtainable by coating one or both surfaces of a glass sheet with a metal film.

4. The laminated glass according to claim 3, wherein the metal film is a silver film.

5. The laminated glass according to any one of claims 1 to 4, wherein the interlayer is composed of a polyvinyl acetal resin.

6. The laminated glass according to claim 5, wherein the polyvinyl acetal resin is a polyvinyl butyral resin plasticized with a plasticizer.

7. The laminated glass according to any one of claims 1 to 6, wherein the amount of the tin-doped indium oxide (ITO) fine particles contained in the interlayer is 0.1 to 1.0% by mass of the interlayer.

8. The laminated glass according to any one of claims 1 to 7, which is used in vehicles as side glass, rear glass, or roof glass.
